# EUROPÄISCHE PATENTSCHRIFT

(11) **EP 2 007 603 B1**
(45) Veröffentlichungstag und Bekanntmachung des Hinweises auf die Patenterteilung: **24.02.2010**
(21) Anmeldenummer: 07723240.3
(22) Anmeldetag: 14.03.2007
(51) Int. Cl.: B60P 3/16, B60R 3/00, B62D 25/16

(54) **KOTFLÜGEL FÜR MOBILE ARBEITSMASCHINEN**
MUDGUARD FOR MOBILE WORKING MACHINES
Aile pour engins de travail mobiles

(30) Priorität: 15.04.2006 DE 102006017766
(43) Veröffentlichungstag der Anmeldung: 31.12.2008
(73) Patentinhaber: Putzmeister Concrete Pumps GmbH, 72631 Aichtal (DE)
(72) Erfinder: HAUSMANN, Matthias, 70188 Stuttgart (DE); SCHNEIDER, Dieter, 70794 Filderstadt (DE); LEIBBRAND, Joachim, 75331 Engelsbrand (DE)
(74) Vertreter: Wolf, Eckhard
(86) Internationale Anmeldenummer: PCT/EP2007/002230
(87) Internationale Veröffentlichungsnummer: WO 2007/118563

(56) Entgegenhaltungen:
- EP-A- 0 088 324
- WO-A-02/060744
- DE-A1-102004 009 712
- DE-U1- 20 100 396
- JP-A- 2003 335 268
- JP-A- 2005 335 446
- DATABASE WPI Week 199108 Derwent Publications Ltd., London, GB; AN 1991-056659 XP002439257 & SU 1 553 432 A (AGRIC-PRODN COMPLEX) 30. März 1990 (1990-03-30)

## Beschreibung

Die Erfindung betrifft einen Kotflügel für Kraftfahrzeuge, insbesondere für mobile Arbeitsmaschinen, mit einem die Laufflächen von Rädern teilweise übergreifenden Schmutzfänger und mit Befestigungsmitteln zur Fixierung des Schmutzfängers an einer fahrgestellfesten Stelle der Arbeitsmaschine.

Kotflügel dieser Art sind vor allem für fahrbare Betonpumpen, Pumpenmischer und fahrbare Bandförderer, die auf LKW-Fahrgestelle montiert werden, bestimmt. Bei selbstfahrenden Arbeitsmaschinen kommt besonders der Montagefreundlichkeit, dem Gewicht, der Oberflächenbehandlung und dem Korrosionsverhalten eine Bedeutung zu. Bekannte Kotflügel dieser Art bestehen überwiegend aus Aluminiumblech. Sie sind als komplizierte Schweißkonstruktionen ausgeführt, die eine aufwändige Oberflächenbeschichtung mit Pulvergrundierung und anschließendem Lackierprozess erfordern. Hinzu kommt der nicht unerhebliche Montageaufwand am Fahrgestell.

Ein kotflügel gemäß dem Oberbegriff der Patentansprüche 1 und 7 ist aus der EP 0 088 324 A1 bekannt.

Ausgehend hiervon liegt der Erfindung die Aufgabe zugrunde, einen Kotflügel der eingangs angegebenen Art zu entwickeln, der sich durch niedriges Gewicht sowie einen relativ geringen Aufwand bei Herstellung und Montage auszeichnet.

Zur Lösung dieser Aufgabe wird die in dem Patentansprüchen 1 und 7 angegebenen Merkmalskombinationen vorgeschlagen. Vorteilhafte Ausgestaltungen und Weiterbildungen der Erfindung ergeben sich aus den abhängigen Ansprüchen.

Die erfindungsgemäße Lösung wird im Wesentlichen darin gesehen, dass der Kotflügel als selbsttragendes Hohlkammerbauteil aus Kunststoff ausgebildet ist, das eine Schmutzfängerpartie und eine einstückig mit dieser verbundene Flanschpartie aufweist, wobei die Flanschpartie mehrere rasterartig zueinander angeordnete Querdurchbrüche aufweist. Vorteilhafterweise sind die Querbrüche als sich zwischen zwei zueinander parallelen Hohlkammerwänden erstreckende Hohlstege ausgebildet. Um eine leichtere Montage und einen Toleranzausgleich zu ermöglichen, sind die Querdurchbrüche in ihrem Umriss zweckmäßig langlochartig ausgebildet. Grundsätzlich ist es möglich, dass die Flanschpartie im Bereich der Querdurchbrüche massiv ausgebildet ist.

Die Erfindung sieht vor, dass die Flanschpartie eine im Wesentlichen rechteckige, von den Querdurchbrüchen durchdrungene Montagefläche aufweist, und dass die Schmutzfängerpartie sich über einen Längsrand an die Flanschpartie anschließt und gegenüber dieser stumpf- oder rechtwinklig abgewinkelt ist, wobei die Flanschpartie und die Schmutzfängerpartie an ihrer Unterseite mit sich über die Abwinkelung hinweg erstreckenden, in das Hohlkammerbauteil eingeformten, zur Unterseite ausgewölbten Rippenkammern verstärkt sind. Mit diesen Maßnahmen können hohe Biegekräfte zwischen der Flansch- und der Schmutzfängerpartie ohne Bruchgefahr aufgenommen werden. Zur weiteren Erhöhung der Formstabilität wird gemäß einer bevorzugten Ausgestaltung der Erfindung die Flanschpartie und/oder die Schmutzfängerpartie an ihren Außenrändern mit zur jeweiligen Unterseite weisenden, in das Hohlkammerbauteil eingeformten Randkammern versehen. Außerdem können in die oberen Begrenzungswände der Flanschpartie und/oder der Schmutzfängerpartie Verstärkungssicken eingeformt sein.

Um eine stabile und bruchsichere Montage zu ermöglichen, weisen die Befestigungsmittel mindestens eine mit Distanzhülsen bestückte Druckplatte auf, wobei die Distanzhülsen im fixierten Zustand zumindest durch einen Teil der im Flanschteil befindlichen Querdurchbrüche unter Anpressen der Druckplatte gegen das Flanschteil hindurchgreifen und mittels Gewindestiften und Gewindemuttern fahrgestellfest fixiert sind. Zur Erzielung eines zusätzlichen Formschlusses weist die Flanschplatte an ihrer Unterseite zweckmäßig in die zugehörige Hohlkammerbegrenzungswand eingeformte, an die Kontur der Druckplatten angepasste Ausnehmungen auf, wobei die Querdurchbrüche die untere Hohlkammerbegrenzungswand im Bereich der Ausnehmungen durchdringen.

Gemäß einer weiteren vorteilhaften Ausgestaltung der Erfindung sind in einer Randzone der Schmutzfängerpartie Gewindeeinsätze zur Befestigung eines Spritzlappens eingelassen.

Die Erfindung bezieht sich außerdem auf eine fahrbare Arbeitsmaschine, insbesondere eine Autobetonpumpe, mit einem Fahrgestell und mit fahrgestellfest angeordneten Pritschen, wobei die Pritschen aus Hohlprofilschienen bestehen, die nach unten offene, hinterschnittene Längsnuten zur Aufnahme von mit Gewindebohrungen oder -stiften versehenen Nutensteinen versehen ist (EP 1 355 820 B1). Vorteilhafterweise sind die erfindungsgemäßen Kotflügel mit ihren Befestigungsmitteln mit den Gewindebohrungen oder -stiften der in den Längsnuten angeordneten Nutensteine verbunden. Die Kotflügelmontage erweist sich in diesem Fall als besonders einfach. Es kann auf vorhandene Befestigungsmittel im Bereich der Hohlprofilpritschen der Arbeitsmaschine zurückgegriffen werden.

Die erfindungsgemäßen Maßnahmen sorgen dafür, dass die Kotflügel als Serienkomponenten an selbstfahrenden Arbeitsmaschinen eingesetzt werden können, die in Bezug auf Standardisierung, Modularität, Herstellungs-und Montageaufwand, Montagefreundlichkeit, Gewicht, Oberflächenbehandlung, Korrosionsverhalten und Design optimiert sind. Die aus durchgefärbtem Kunststoff bestehenden Kotflügel benötigen keinerlei Oberflächenbehandlung. Die vorbereiteten Querdurchbrüche in den Flanschpartien, die als Langlöcher ausgebildet sind, ermöglichen eine positionsgenaue Montage. Bei einer Verwendung gleichartiger Hohlprofilpritschen an verschiedenartigen Arbeitsmaschinen lassen sich die gleichen Kotflügel an unterschiedlichen Maschinenmodellen einsetzen. Man erhält dadurch einen hohen Standardisierungsgrad mit geringstmöglicher Lagerhaltung.

Um einen Rechts- und Linkseinbau der Kotflügel zu ermöglichen, sind die Flanschpartie und die Schmutzfängerpartie bezüglich einer vertikalen Mittelebene spiegelsymmetrisch aufgebaut.

Im Folgenden wird die Erfindung anhand eines in der Zeichnung in schematischer Weise dargestellten Ausführungsbeispiels näher erläutert. Es zeigen
- Fig. 1: eine Seitenansicht einer Arbeitsmaschine mit Hohlkammer- profilpritsche und an dieser angesetzten Kotflügeln;
- Fig. 2: einen vergrößerten Ausschnitt aus Fig. 1 aus dem Bereich der Hinterachse;
- Fig. 3a und b: eine Draufsicht und eine Untenansicht des Kotflügels jeweils in schaubildlicher Darstellung;
- Fig. 4a bis d: eine Breitseitenansicht, eine Untenansicht, eine Draufsicht und eine Schmalseitenansicht des Kotflügels nach Fig. 3a und 3b;
- Fig. 5a und b: Schnitte entlang der Schnittlinien A - A und B - B der Fig. 4a;
- Fig. 6a bis c: eine Breitseitenansicht, eine Schmalseitenansicht und eine Draufsicht einer mit Distanzhülsen bestückten Befestigungs- platte als Befestigungsmittel für den Kotflügel; und
- Fig. 7a bis c: zwei zueinander senkrechte Schnitte durch den Befestigungs- flansch sowie einen vergrößerten Ausschnitt aus Fig. 7b mit eingesetzten Befestigungsmitteln.

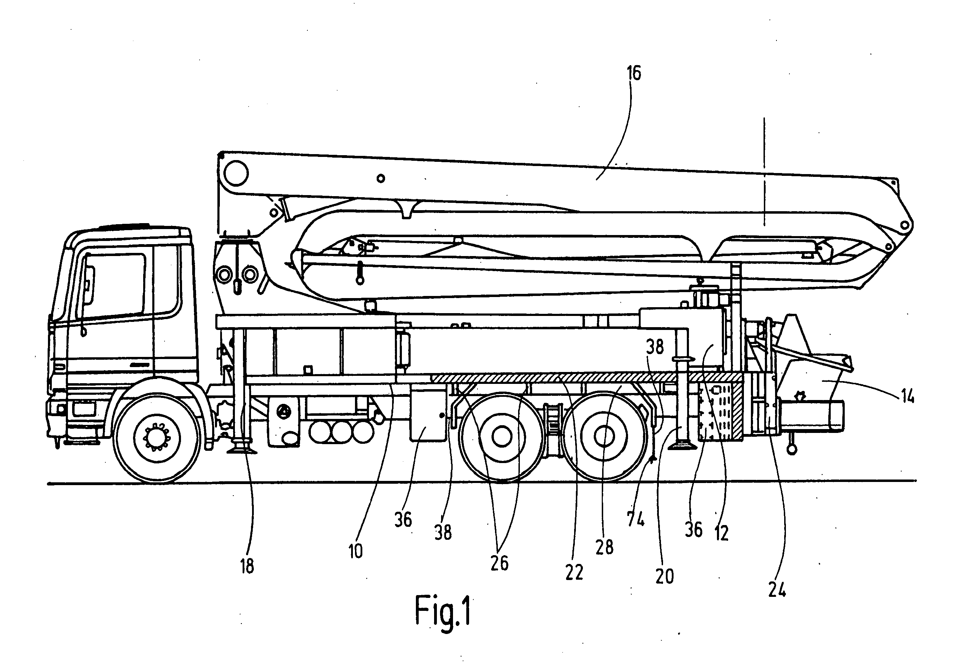

In der Zeichnung sind die erfindungsgemäßen Kotflügel für das Beispiel einer Autobetonpumpe dargestellt. Die in Fig. 1 gezeigte Autobetonpumpe weist ein Fahrgestell 10, eine auf dem Fahrgestell angeordnete Dickstoffpumpe 12 mit Materialaufgabebehälter 14 und Verteilermast 16, vorder- und rückwärtige, am Fahrgestell ausfahrbare Stützbeine 18, 20, zwei seitlich neben der Dickstoffpumpe 12 und dem Verteilermast 16 am Fahrgestell angeordnete Pritschen 22 sowie eine zu den Pritschen führende rückwärtige Aufstiegstreppe 24 auf. Die Pritschen 22 liegen auf Tragkonsolen 26 auf, die im Abstand voneinander an zugehörigen Längsträgern 28 eines fahrgestellfesten Traggestells angeschweißt sind und seitlich über diese überstehen. Die Pritschen 22 bestehen aus Hohlprofilschienen 30, die mit nach unten offnen, hinterschnittenen Längsnuten 33 zur Aufnahme von mit Gewindebohrungen oder -stiften versehenen Nutensteinen 35 ausgestattet sind. Die Nutensteine 35 können an beliebigen Stellen der Längsnuten positioniert werden. Die in den Längsnuten 33 befindlichen Nutensteine 35 werden einmal zur Fixierung der die Pritschen bildenden Hohlprofilschienen 30 an den Tragkonsolen 26 verwendet. Zum anderen können über die Längsnuten 33 und die Nutensteine 35 auch Anbauteile 36, wie Werkzeugkästen, Magazine oder dergleichen mittels Schrauben von unten her fixiert werden. Die Hohlkammern in den Hohlprofilschienen 30 eigenen sich außerdem zur Unterbringung von Leitungen, insbesondere von Elektro- und Pneumatik- oder Hydraulikleitungen, die entlang dem Fahrgestell der Autobetonpumpe verlegt werden müssen.

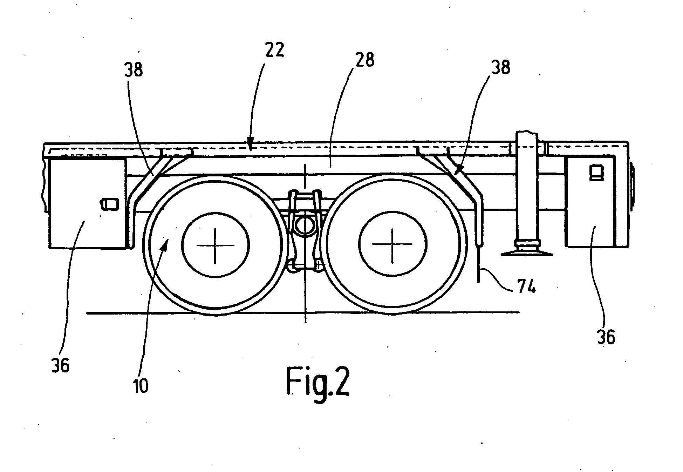

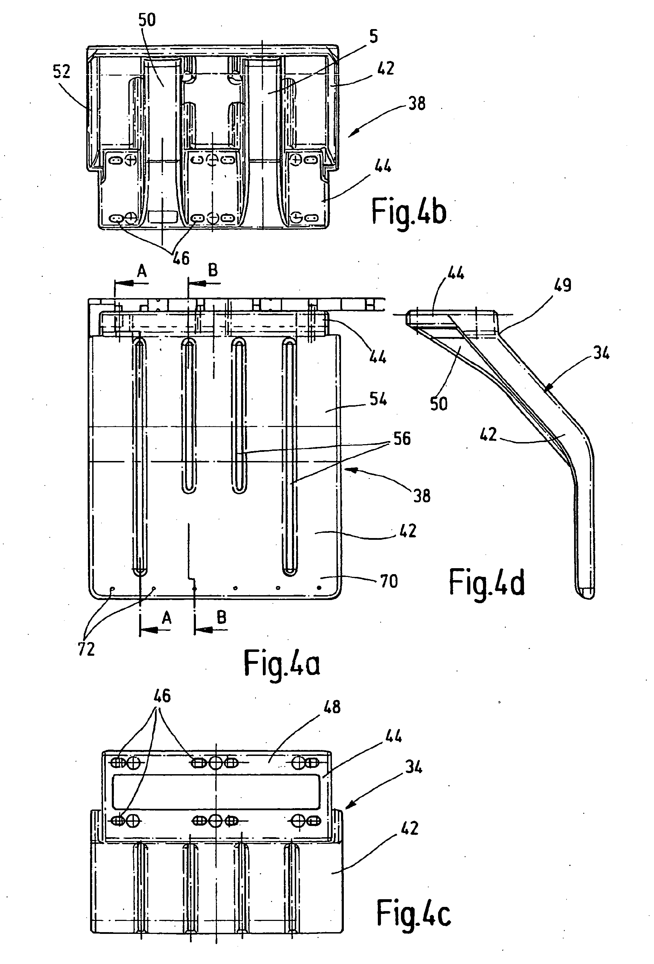

Bei dem in der Zeichnung dargestellten Ausführungsbeispiel sind außerdem die Kotflügel 38 mit Befestigungsmitteln 40 und den Nutensteinen 35 an den Hohlprofilschienen 30 fixiert (vgl. Fig. 2 und 4a).

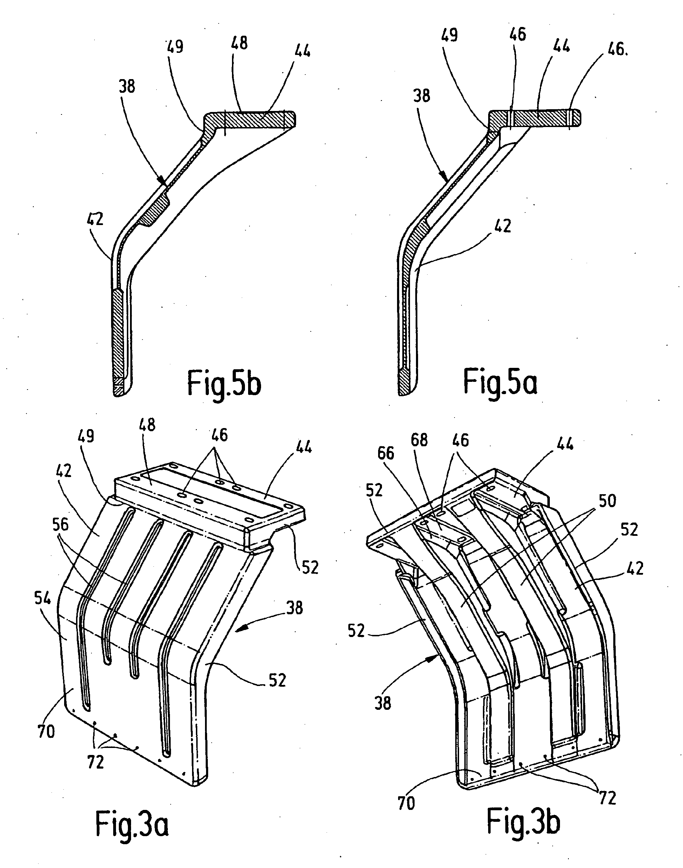

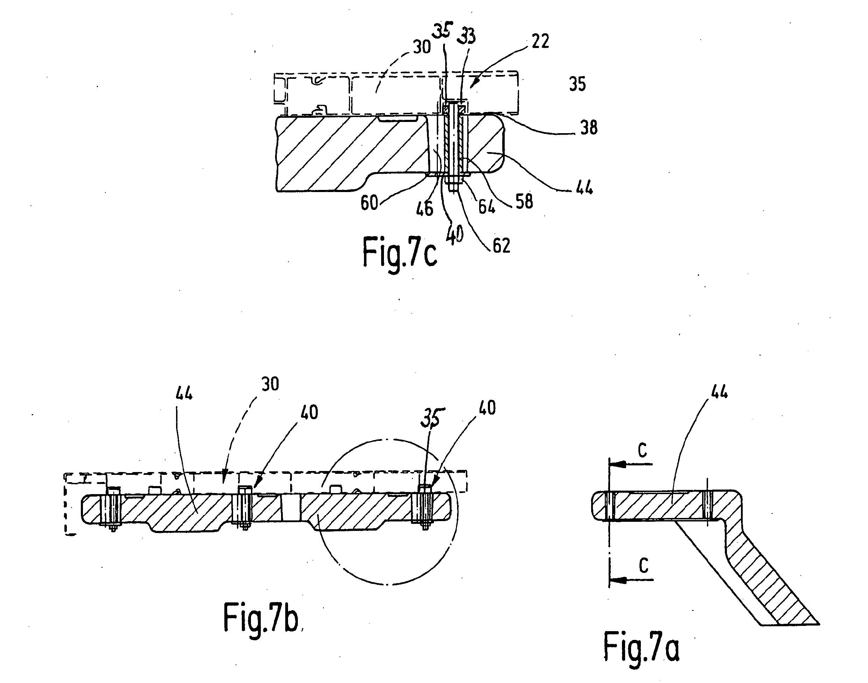

Der in Fig. 3 bis 7 gezeigte Kotflügel 38 ist als selbsttragendes Hohlkammerbauteil aus Kunststoff, vorzugsweise aus Polyethylen ausgebildet, das zweckmäßig im Rotationsverfahren hergestellt wird. Das Hohlkammerbauteil weist eine Schmutzfängerpartie 42 und eine einstückig mit dieser verbundene Flanschpartie 44 auf. Die Flanschpartie 44 weist mehrere rasterartig angeordnete, nach Art von Langlöchern langgestreckte Querdurchbrüche 46 auf, die die Flanschpartie quer durchdringen und die beispielsweise als sich zwischen zwei zueinander parallelen Hohlkammerwänden erstreckende Hohlstege ausgebildet sein können. In Fig. 5a und 7a bis c ist angedeutet, dass die Flanschpartie im Bereich der Querdurchbrüche auch massiv ausgebildet sein kann. Wie insbesondere aus Fig. 3a und 4c zu ersehen ist, weist die Flanschpartie 44 eine im Wesentlichen rechteckige, von den Querdurchbrüchen 46 durchdrungene Montagefläche 48 auf, während die Schmutzfängerpartie 42 sich an einem Längsrand 49 an die Flanschpartie 44 anschließt und gegenüber dieser stumpfwinklig abgewinkelt ist (Fig. 4d, 5a und b). Die Flanschpartie 44 und die Schmutzfängerpartie 42 sind an ihren Unterseiten mit sich über den Längsrand 49 hinweg erstreckenden, in das Hohlkammerbauteil eingeformten, zur Unterseite ausgewölbten Rippenkammern 50 verstärkt. Zur weiteren Verstärkung weisen die Flanschpartie 44 und die Schmutzfängerpartie 42 an ihren Außenrändern zur Unterseite überstehende, in das Hohlkammerbauteil eingeformte Randkammern 52 sowie in die obere Begrenzungswand 54 der Schmutzfängerpartie eingeformte Verstärkungssicken 56 auf. Um einen sowohl rechts- als auch linksseitigen Einbau zu ermöglichen, ist der Kotflügel bezüglich einer vertikalen Mittelebene spiegelsymmetrisch aufgebaut (vgl. Fig. 3a und b).

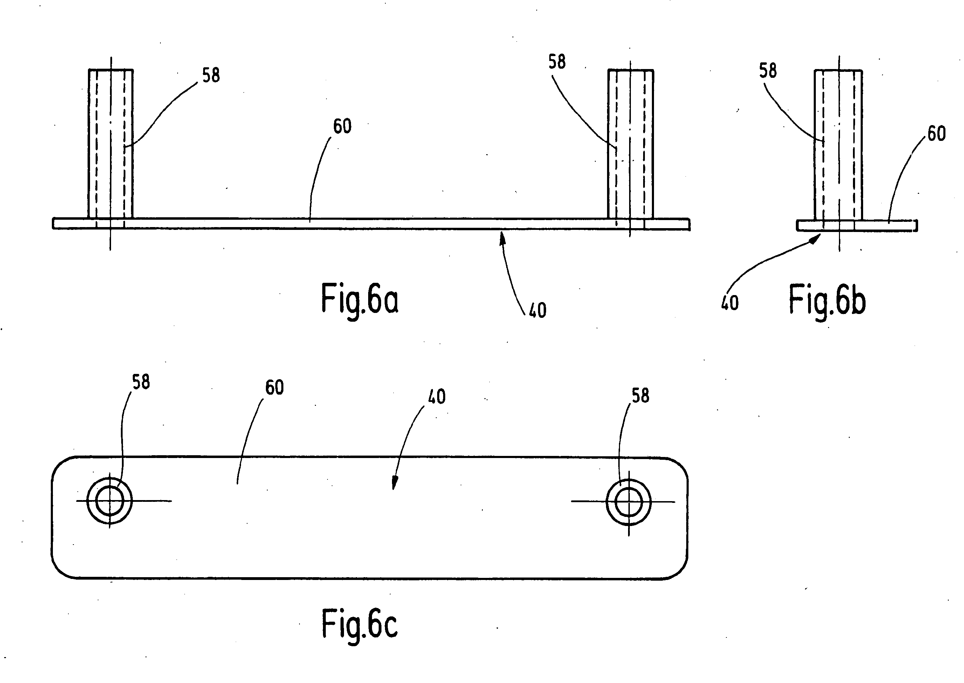

Zur Fixierung des Kotflügels an den Hohlprofilschienen 30 der Pritschen 22 sind Befestigungsmittel 40 vorgesehen, die gemäß Fig. 6a bis c eine Druckplatte 60 mit zwei im Abstand voneinander angeordneten Distanzhülsen 58 aufweisen. Die Distanzhülsen 58 greifen im fixierten Zustand durch zwei benachbarte Querdurchbrüche 46 der Flanschpartie 44 hindurch, und sind mittels Gewindestiften 62 und Stoppmuttern 64 über die Nutensteine 35 mit den Längsnuten 33 der Pritsche 22 verschraubt. Um die Druckplatten 60 am Kotflügel gegen seitliches Verschieben zu sichern, sind in die untere Hohlkammerbegrenzungswand 66 der Flanschpartie 44 Vertiefungen 68 eingeformt, die an die Außenkontur der Druckplatte 60 angepasst sind.

In einer unteren Randzone 70 der Schmutzfängerpartie sind mehrere in einer Reihe angeordnete Gewindeeinsätze 72 eingelassen, die zur Fixierung eines Spritzlappens 74 bestimmt sind (Fig. 3b und Fig. 2).

Zusammenfassend ist folgendes festzuhalten: Die Erfindung bezieht sich auf einen Kotflügel 38 für Kraftfahrzeuge, insbesondere für fahrbare Betonpumpen. Der Kotflügel 38 weist einen die Laufflächen von Rädern der mobilen Arbeitsmaschine teilweise übergreifenden Schmutzfänger 42 sowie Befestigungsmittel 40 zur Fixierung des Schmutzfängers an einer fahrgestellfesten Stelle der Arbeitsmaschine auf. Erfindungsgemäß ist der Kotflügel 38 als selbsttragendes Hohlkammerbauteil aus Kunststoff ausgebildet, das eine Schmutzfängerpartie 42 und eine einstückig mit dieser verbundene Flanschpartie 44 aufweist, wobei die Flanschpartie 44 mehrere rasterartig zueinander angeordnete Querdurchbrüche 46 zur Aufnahme der Befestigungsmittel 40 aufweist.

## Patentansprüche

1. Kotflügel für Kraftfahrzeuge, insbesondere für mobile Arbeitsmaschinen, mit einem die Laufflächen von Rädern teilweise übergreifenden, als selbsttragendes Hohlkammerbauteil aus Kunststoff ausgebildeten Schmutzfänger und mit Befestigungsmitteln (40) zur Fixierung des Schmutzfängers an einer fahrgestellfesten Stelle des Kraftfahrzeugs, wobei das Hohlkammerbauteil eine Schmutzfängerpartie (42) und eine einstückig mit dieser verbundene Flanschpartie (44) aufweist, **dadurch gekennzeichnet, dass** die Flanschpartie (44) eine im Wesentlichen rechteckige, von rasterartig angeordneten Querdurchbrüchen (46) durchdrungene Montagefläche (47) aufweist, dass die Schmutzfängerpartie (42) sich an einem Längsrand (49) an die Flanschpartie (44) anschließt und gegenüber dieser stumpf- oder rechtwinklig abgewinkelt ist, und dass die Flanschpartie (44) und die Schmutzfängerpartie (42) an ihrer Unterseite mit sich über den Längsrand hinweg erstreckenden, in das Hohlkammerbauteil eingeformten zur Unterseite ausgewölbten Rippenkammern (50) verstärkt sind.

2. Kotflügel nach Anspruch 1, **dadurch gekennzeichnet, dass** die Flanschpartie (44) im Bereich der Querdurchbrüche (46) massiv ausgebildet ist.

3. Kotflügel nach Anspruch 1, **dadurch gekennzeichnet, dass** die Querdurchbrüche (46) als sich zwischen zwei zueinander parallelen Hohlkammerwände erstreckende Hohlstege ausgebildet sind.

4. kotflügel nach einem der Ansprüche 1 bis 3, **dadurch gekennzeichnet, dass** die Flanschpartie (44) und/oder die Schmutzfängerpartie (42) an ihren Außenrändern zur jeweiligen Unterseite überstehende, in das Hohlkammerbauteil eingeformte Randkammern (52) aufweisen.

5. Kotflügel nach einem der Ansprüche 1 bis 4, **dadurch gekennzeichnet, dass** in die obere Begrenzungswand (54) der Flanschpartie und/oder der Schmutzfängerpartie (42) Versteifungssicken (56) eingeformt sind.

6. Kotflügel nach einem der Ansprüche 1 bis 5, **dadurch gekennzeichnet, dass** die Befestigungsmittel (40) jeweils eine mit mindestens einer Distanzhülse (58) bestückte Druckplatte (60) aufweisen, und dass die mindestens eine Distanzhülse im fixierten Zustand durch zumindest einen Teil der in der Flanschpartie (44) befindlichen Querdurchbrüche unter Anpressen der Druckplatte (60) gegen die Flanschpartie (44) hindurchgreifen und mit Gewindemitteln (64) fahrgestellfest fixiert sind.

7. Kotflügel für Kraftfahrzeuge, insbesondere für mobile Arbeitsmaschinen, mit einem die Laufflächen von Rädern teilweise übergreifenden als selbsttragendes Hohlkammerbauteil aus Kunststoff ausgebildeten Schmutzfänger und mit Befestigungsmitteln (40) zur Fixierung des Schmutzfängers an einer fährgestellfesten Stelle des Kraftfahrzeugs, wobei das Hohlkammerbauteil eine Schmutzfängerpartie (42) und eine einstückig mit dieser verbundene Flanschpartie (44) aufweist, **dadurch gekennzeichnet, dass** die Flanschpartie (44) mehrere rasterartig angeordnete Querdurchbrüche (46) aufweist, dass die Befestigungsmittel (40) jeweils eine mit mindestens einer Distanzhülse (58) bestückte Druckplatte (60) aufweisen, und dass die mindestens eine Distanzhülse im fixierten Zustand durch zumindest einen Teil der in der Flanschpartie (44) befindlichen Querdurchbrüche unter Anpressen der Druckplatte (60) gegen die Flanschpartie (44) hindurchgreifen und mit Gewindemitteln (64) fahrgestellfest fixiert sind.

8. Kotflügel nach Anspruch 6 oder 7, **dadurch gekennzeichnet, dass** die Druckplatte (60) mit zwei im Abstand voneinander angeordneten, parallel ausgerichteten Distanzhülsen (60) bestückt ist.

9. Kotflügel nach einem der Ansprüche 6 bis 8, **dadurch gekennzeichnet, dass** die Flanschpartie (44) an ihrer Unterseite in die dortige Hohlkammerbegrenzungswand (66) eingeformte, an die Kontur der Druckplatten (60) angepasste Vertiefungen (68) aufweist.

10. Kotflügel nach Anspruch 9, **dadurch gekennzeichnet, dass** die Querdurchbrüche (46) die untere Hohlkammerbegrenzungswand (66) im Bereich der Vertiefungen (68) durchdringen.

11. Kotflügel nach einem der Ansprüche 1 bis 10, **dadurch gekennzeichnet, dass** in einer Randzone (70) der Schmutzfängerpartie (42) Gewindeeinsätze (72) zur Befestigung eines Spritzlappens (74) eingelassen sind.

12. Kotflügel nach einem der Ansprüche 1 bis 11, **dadurch gekennzeichnet, dass** die Flanschpartie (44) und die Schmutzfängerpartie (42) bezüglich einer vertikalen Mittelebene spiegelsymmetrisch aufgebaut sind.

13. Kraftfahrzeug, insbesondere mobile Arbeitsmaschine, mit einem Fahrgestell (10) und auf seitlich am Fahrgestell (10) überstehenden Tragkonsolen (26) aufliegenden, begehbaren Pritschen (22), wobei die Pritschen (22) aus Hohlprofilschienen (30) bestehen, die nach unten offene, hinterschnittene Längsnuten (33) zur Aufnahme von mit Gewindebohrungen oder -stiften versehenen Nutensteinen (35) aufweisen, **dadurch gekennzeichnet, dass** die Kotflügel nach einem der Ansprüche 1 bis 12 mit ihren Befestigungsmitteln (40) mittels durch Distanzhülsen (58) hindurchgreifende Gewindestiften (62) mit in den Längsnuten (33) angeordneten Nutensteinen (35) starr verbunden sind.

## Claims

1. Mudguard for motor vehicles, particularly for mobile working machines, having a dirt catcher that partly covers the running surfaces of wheels, configured as a self-supporting hollow-chamber component made of plastic, and having attachment means (40) for fixing the dirt catcher in place on a location of the working machine that is fixed on the chassis, whereby the hollow-chamber component has a dirt catcher part (42) and a flange part (44) connected with it in one piece, **characterized in that** the flange part (44) has an essentially rectangular installation surface (47), through which crosswise perforations (46) disposed in raster-like manner penetrate, that the dirt catcher part (42) follows the flange part (44) at a longitudinal edge (49), and is angled away, relative to it, at an obtuse or right angle, and that the flange part (44) and the dirt catcher part (42) are reinforced on their underside, with rib chambers (50) that extend beyond the longitudinal edge and are formed into the hollow-chamber component, doming out towards the underside.

2. Mudguard according to claim 1, **characterized in that** the flange part (44) is configured to be solid in the region of the crosswise perforations (46).

3. Mudguard according to claim 1, **characterized in that** the crosswise perforations (46) are configured as hollow crosspieces that extend between hollow chamber walls that run parallel to one another.

4. Mudguard according to one of claims 1 to 3, **characterized in that** the flange part (44) and/or the dirt catcher part (42) have edge chambers (52) on their outer edges, projecting towards the underside, in each instance, formed into the hollow-chamber component.

5. Mudguard according to one of claims 1 to 4, **characterized in that** reinforcement beads (56) are formed into the upper delimitation wall (54) of the flange part and/or of the dirt catcher part (42).

6. Mudguard according to one of claims 1 to 5, **characterized in that** the attachment means (40) have a pressure plate (60) equipped with at least one spacer sleeve (58), in each instance, and that the at least one spacer sleeve pass through at least one part of the perforations situated in the flange part (44), in the fixed state, pressing the pressure plate (60) against the flange part (44), and are fixed in place on the chassis using threaded means (64).

7. Mudguard for motor vehicles, particularly for mobile working machines, having a dirt catcher that partly covers the running surfaces of wheels, configured as a self-supporting hollow-chamber component made of plastic, and having attachment means (40) for fixing the dirt catcher in place on a location of the working machine that is fixed on the chassis, whereby the hollow-chamber component has a dirt catcher part (42) and a flange part (44) connected with it in one piece, **characterized in that** the flange part (44) has multiple crosswise perforations (46) disposed in raster-like manner, that the attachment means (40) have a pressure plate (60) equipped with at least one spacer sleeve (58), in each instance, and that the at least one spacer sleeve pass through at least one part of the perforations situated in the flange part (44), in the fixed state, pressing the pressure plate (60) against the flange part (44), and are fixed in place on the chassis using threaded means (64).

8. Mudguard according to claim 6 or 7, **characterized in that** the pressure plate (60) is equipped with two spacer sleeves (60) disposed at a distance from one another and oriented parallel.

9. Mudguard according to one of claims 6 to 8, **characterized in that** the flange part (44), on its underside, has depressions (68) formed into the hollow-chamber delimitation wall (66) there, adapted to the contour of the pressure plates (60).

10. Mudguard according to claim 9, **characterized in that** the crosswise perforations (46) penetrate the lower hollow-chamber delimitation wall (66) in the region of the depressions (68).

11. Mudguard according to one of claims 1 to 10, **characterized in that** threaded inserts (72) for attaching a mud flap (74) are let into an edge zone (70) of the dirt catcher part (42).

12. Mudguard according to one of claims 1 to 11, **characterized in that** the flange part (44) and the dirt catcher part (42) are structured with mirror symmetry with reference to a vertical center plane.

13. Motor vehicle, particularly a mobile working machine, having a chassis (10) and platforms (22) resting on support brackets (26), which platforms project laterally from the chassis (10) and on which it is possible to walk, whereby the platforms (22) consist of hollow-profile rails (30) that have undercut longitudinal grooves (33), open towards the bottom, for accommodating T-nuts (35) provided with threaded bores or pins, **characterized in that** the mudguards according to one of claims 1 to 12 are rigidly connected with the T-nuts (35) disposed in the longitudinal grooves (33), with their attachment means (40), by means of threaded pins (62) that pass through spacer sleeves (58).

## Revendications

1. Aile pour véhicules automobiles, notamment pour engins mobiles de travail, comprenant un garde-boue coiffant partiellement les surfaces de roulement de roues et réalisé sous la forme d'une pièce autoporteuse à structure alvéolaire en matière plastique, et des moyens de fixation (40) pour verrouiller ledit garde-boue à demeure dans une zone faisant corps avec le châssis de roulement du véhicule automobile, la pièce à structure alvéolaire englobant une région (42) collectrice de boues et une région (44) formant bride qui est reliée d'une seule pièce à la région précitée, **caractérisée par le fait que** la région (44) formant bride présente une surface de montage (47) sensiblement rectangulaire, percée de perforations transversales (46) agencées selon un quadrillage ; **par le fait que** la région (42) collectrice de boues se rattache à la région (44) formant bride par un bord longitudinal (49), et est coudée à angle obtus ou à angle droit par rapport à ladite région ; et **par le fait que** ladite région (44) formant bride et ladite région (42) collectrice de boues sont renforcées, à leur face inférieure, par des caissons de nervurage (50) partant du bord longitudinal, ménagés d'un seul tenant dans la pièce à structure alvéolaire, et bombés vers ladite face inférieure.

2. Aile selon la revendication 1, **caractérisée par le fait que** la région (44) formant bride est de réalisation massive dans la zone des perforations transversales (46).

3. Aile selon la revendication 1, **caractérisée par le fait que** les perforations transversales (46) sont réalisées sous la forme de membrures creuses s'étendant entre deux parois de la structure alvéolaire, parallèles l'une à l'autre.

4. Aile selon l'une des revendications 1 à 3, **caractérisée par le fait que** la région (44) formant bride et/ou la région (42) collectrice de boues comporte(nt), sur ses (leurs) bords extérieurs, des caissons marginaux (52) en saillie vis-à-vis de la face inférieure considérée, ménagés d'un seul tenant dans la pièce à structure alvéolaire.

5. Aile selon l'une des revendications 1 à 4, **caractérisée par le fait que** des moulures de rigidification (56) sont ménagées d'un seul tenant dans la paroi supérieure de délimitation (54) de la région formant bride et/ou de la région (42) collectrice de boues.

6. Aile selon l'une des revendications 1 à 5, **caractérisée par le fait que** les moyens de fixation (40) comprennent, respectivement, une platine de pression (60) garnie d'au moins une douille d'espacement (58) ; et **par le fait que** la douille d'espacement prévue au minimum traverse, à l'état assujetti, au moins une partie des perforations transversales pratiquées dans la région (44) formant bride, en appliquant fermement la platine de pression (60) contre ladite région (44) formant bride, et est assujettie au châssis de roulement par des moyens filetés (64).

7. Aile pour véhicules automobiles, notamment pour engins mobiles de travail, comprenant un garde-boue coiffant partiellement les surfaces de roulement de roues et réalisé sous la forme d'une pièce autoporteuse à structure alvéolaire en matière plastique, et des moyens de fixation (40) pour verrouiller ledit garde-boue à demeure dans une zone faisant corps avec le châssis de roulement du véhicule automobile, la pièce à structure alvéolaire englobant une région (42) collectrice de boues et une région (44) formant bride qui est reliée d'une seule pièce à la région précitée, **caractérisée par le fait que** ladite région (44) formant bride présente plusieurs perforations transversales (46) agencées selon un quadrillage ; **par le fait que** les moyens de fixation (40) comprennent, respectivement, une platine de pression (60) garnie d'au moins une douille d'espacement (58) ; et **par le fait que** la douille d'espacement prévue au minimum traverse, à l'état assujetti, au moins une partie des perforations transversales pratiquées dans la région (44) formant bride, en appliquant fermement la platine de pression (60) contre ladite région (44) formant bride, et est assujettie au châssis de roulement par des moyens filetés (64).

8. Aile selon la revendication 6 ou 7, **caractérisée par le fait que** la platine de pression (60) est garnie de deux douilles d'espacement (60) disposées à distance l'une de l'autre et orientées parallèlement.

9. Aile selon l'une des revendications 6 à 8, **caractérisée par le fait que** la région (44) formant bride présente, à sa face inférieure, des renfoncements (68) adaptés au profil des platines de pression (60) et ménagés, d'un seul tenant, dans la paroi de délimitation (66) de la structure alvéolaire qui se trouve à ladite face inférieure.

10. Aile selon la revendication 9, **caractérisée par le fait que** les perforations transversales (46) traversent la paroi inférieure (66) de délimitation de la structure alvéolaire dans la région des renfoncements (68).

11. Aile selon l'une des revendications 1 à 10, **caractérisée par le fait que** des embouts taraudés (72) sont intégrés dans une zone marginale (70) de la région (42) collectrice de boues, en vue de la fixation d'une bavette (74) anti-éclaboussures.

12. Aile selon l'une des revendications 1 à 11, **caractérisée par le fait que** la région (44) formant bride et la région (42) collectrice de boues offrent un agencement structurel spéculaire vis-à-vis d'un plan médian vertical.

13. Véhicule automobile, notamment engin mobile de travail comprenant un châssis de roulement (10) et des plates-formes praticables (22) reposant sur des consoles de support (26) faisant saillie latéralement au-delà dudit châssis de roulement (10), lesdites plates-formes (22) étant constituées par des rails profilés creux (30) munis de rainures longitudinales contre-dépouillées (33) ouvertes vers le bas, en vue de recevoir des coulisseaux (35) pourvus de trous taraudés ou de chevilles filetées, **caractérisé par le fait que** les ailes selon l'une des revendications 1 à 12 sont reliées rigidement par leurs moyens de fixation (40), à l'aide de chevilles filetées (62) traversant des douilles d'espacement (58), à des coulisseaux (35) logés dans les rainures longitudinales (33).
